# EUROPEAN PATENT APPLICATION

(11) **EP 3 739 742 A1**
(43) Date of publication of application: **18.11.2020**
(21) Application number: 20167800.0
(22) Date of filing: 02.04.2020
(51) Int. Cl.: H02M 3/335, H02P 27/08

(54) **DRIVING APPARATUS FOR THE CONTROL OF ELECTRIC MOTORS IN ELECTRICAL HOUSEHOLD APPLIANCES OR IN VENTILATION APPARATUSES AND METHOD FOR SUPPLYING POWER TO THE SELV ZONE IN SAID APPARATUS**

(30) Priority: 16.05.2019 IT 201900006882
(71) Applicant: Intea Engineering Tecnologie Elettroniche Applicate S.R.L., 25057 Sale Marasino (IT)
(72) Inventor: QUADRI, Stefano, 25010 ISORELLA BS (IT); NOVALI, Ivano Stefano, 25057 SALE MARASINO BS (IT); PAGANI, Luigi, 22070 LIMIDO COMASCO CO (IT)
(74) Representative: Modiano, Micaela Nadia

(57) **Abstract**

A driving apparatus (1) for the control of electric motors in electrical household appliances or in ventilation apparatuses, comprising:
- a SELV zone (101) which comprises an analog signal receiving and interpreting unit (100) configured to receive and interpret an analog electrical signal (S);
- an electronic control unit (20), configured to adjust, as a function of the analog electrical signal (S), the amplitude and/or frequency values of a three-phase supply current that originates from a mains electrical source (E) and powers at least one electric motor (99), so as to control the at least one electric motor (99);
- an auxiliary power supply unit (40), which supplies electric power to at least the electronic control unit (20);

the SELV zone (101) is powered by an isolated voltage generated by a transformer unit (90) which comprises a pulse transformer (91) controlled by the electronic control unit (20) by means of a PWM signal transmitted to an electronic switch (92); the pulse transformer (91) comprises a primary winding arranged outside the SELV zone (101) and a secondary winding that is comprised in the SELV zone (101) and is galvanically isolated from the primary winding.

## Description

The present invention relates to a driving apparatus for the control and driving of electric motors in electrical household appliances or in ventilation apparatuses. The invention also relates to a method for supplying power to the SELV zone (English acronym from "safety extra-low voltage") in this type of apparatus.

The present invention is useful and practical, particularly but not exclusively, in the field of ventilation and air movement systems and more specifically in systems in which there are multiple drivers and motors which are mutually interconnected by means of a data network.

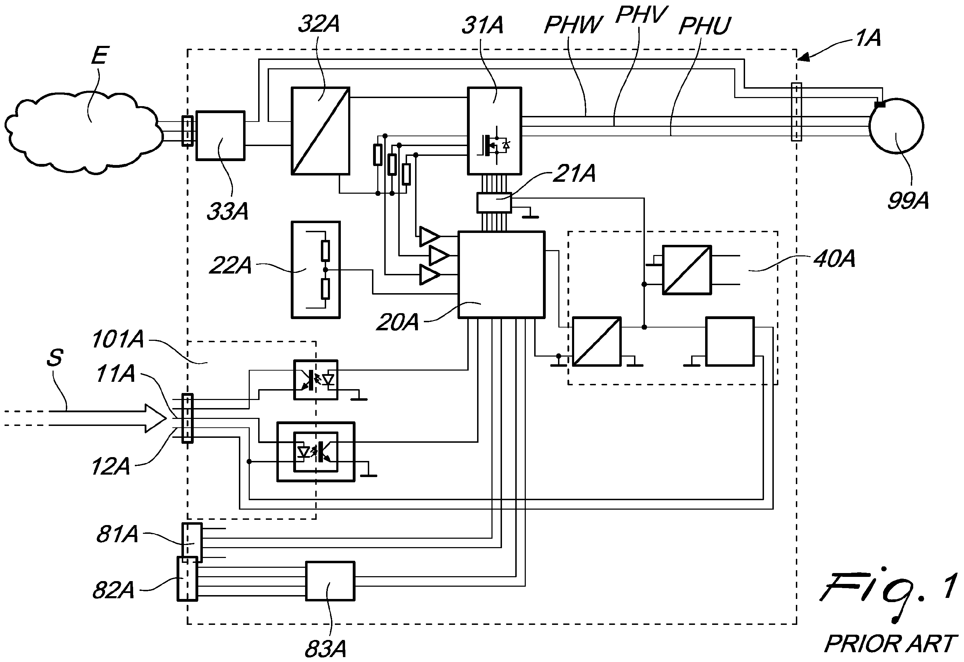

Figure 1 shows an electrical diagram of a generic driving board 1A for the control of three-phase electric motors, which constitutes a common driving apparatus used for the control and driving of electric motors of a known type.

In these boards 1A of a known type, with reference to Figure 1, a single-phase alternating mains voltage (typically having a nominal voltage of 220V - 230V and a frequency of 50Hz - 60Hz), originating from an electrical source E, such as for example an outlet of a normal home electrical network, is first applied to a filter unit 33A (comprising for example an EMI filter that filters the unwanted frequencies) and then to an AC/DC conversion unit 32A that rectifies and levels it.

This voltage, which has become direct, is sent to a three-phase converter 31A (i.e., an inverter) that has the function of converting it back to a three-phase set of three alternating voltages (PHU, PHV and PHW) the amplitude and frequency of which can be varied. These three signals (PHU, PHV and PHW) in output from the three-phase converter 31A supply power to the phases of the electric motor 99A to be driven.

By setting appropriately the amplitude and frequency values of the three-phase set of three alternating voltages/currents, the motor 99A is forced to rotate at a certain mechanical rate with a certain driving torque.

The board 1A also comprises an electronic control unit 20A (i.e., a microprocessor, a microcontroller or similar device), functionally connected to the three-phase converter 31A by means of a driver 21A, which performs the function to manage the conversion performed by the three-phase converter 31A itself, determining the correct amplitude and frequency values in order to turn the electric motor 99A to the rate set as a function of an analog signal S in input received by an analog signal receiving and interpreting unit.

In greater detail, the analog signal receiving and interpreting unit comprises one or more SELV analog inputs (English acronym from "safety extra-low voltage") provided with at least one positive input pole 11A and a negative input pole 12A. In practice, the analog signal S is transmitted to the analog signal receiving and interpreting unit by applying to the input poles 11A, 12A a voltage as a function of which the rate and the torque with which the motor 99A is driven are determined: as a function of this voltage, appropriately interpreted, the electronic control unit 20A determines the amplitude and the frequency of the three signals (PHU, PHV and PHW) that supply power to the motor 99A.

The board 1A comprises furthermore an auxiliary power supply unit 40A which creates, starting from the voltage that arrives from the electrical source E and rectified by the AC/DC conversion unit 32A, all the power supplies necessary for the operation of the board 1A. In particular, this auxiliary power supply unit 40A creates a SELV safety voltage, which is isolated with respect to the rest of the board 1A, in order to supply power to the components of the analog signal receiving and interpreting unit located in the "SELV" zone 101A.

In general, in apparatuses of a known type, the SELV safety voltage is obtained by drawing power from an additional winding that is present in the auxiliary power supply unit 40A and provided with suitable isolation characteristics in order to try and ensure the electrical safety to the SELV zone 101A.

In other words, in the background art, the circuit part that constitutes the analog signal interface of the driving apparatus 1A, is powered by means of a SELV voltage for safety requirements and this voltage is obtained by means of an appropriate secondary output of a transformer that is part of a (typically switching) power supply comprised in the auxiliary power supply unit 40A, which generates moreover all the voltages required for the correct operation of the apparatus constituted by the board 1A.

The board 1A normally also comprises additional interface elements such as inputs/outputs 81A, 82A in order to connect buttons 83A and a unit 22A for measuring the rectified DC voltage in output from the AC/DC conversion unit 32A, connected to the electronic control unit 20A.

These driving apparatuses of the known type, although useful and practical, have technical problems linked particularly to the generation and propagation of electromagnetic noise.

As is known, in fact, driving apparatuses of a known type are critical from the point of view of electromagnetic compatibility, since they are sources of electromagnetic noise, both carried by the connection cables connected thereto and radiated.

In particular, the electromagnetic noise created by the switchings of the three-phase converter 31A, which is electrically connected to the same mains electrical source E to which the auxiliary power supply unit 40A is connected, couples capacitively to the SELV voltage generated by the auxiliary power supply unit 40A and particularly to the ground of this voltage.

Since normally this ground is connected directly to the negative input pole 12A of the analog signal receiving and interpreting unit, the electromagnetic noise is provided directly outside the driving apparatus 1A, practically without any attenuation.

In the background art, therefore, in order to reduce the intensity of this noise, besides the insertion of EMC/EMI filters, which are already inherently expensive, on the board, it is necessary to add further expensive filters and ferrites on the connection cables that interconnect the driving board to the other devices that constitute the apparatus (for example, the ventilation system).

In fact, normally the analog port of driving apparatuses of the known type (i.e., with reference to the example of Figure 1, the input of the analog signal receiving and interpreting unit constituted by the two poles 11A and 12A) is connected to the output of a regulator that provides the desired set point for the rate/torque of the motor 99A by means of the analog signal S.

In complex systems, such as for example the air-conditioning systems of hotels, hospitals, etcetera, the regulators are in turn interconnected by means of a wired network and consequently the noise generated by the driving apparatuses that couple by means of the analog inputs would propagate throughout the system. In order to avoid this problem, in the background art it is necessary to filter strongly the analog input of the driving apparatuses.

Disadvantageously, adding components, both internal and external to the driving apparatuses, adapted to filter the noise originating from said driving apparatuses, besides increasing costs also causes an increase in the space occupation and complexity of the system.

The aim of the present invention is to provide a driving apparatus for the control and driving of electric motors in electrical household appliances or in ventilation apparatuses that solves the technical problem described above, obviates the drawbacks and overcomes the limitations of the background art, allowing to reduce the noise and therefore the conducted and radiated emissions in output from the driving apparatus.

Within this aim, an object of the present invention is to provide a driving apparatus for the control and driving of electric motors that absorbs less power than that of the background art.

Another object of the invention is to provide a driving apparatus for the control and driving of electric motors that is simpler and more compact if compared with the background art.

Another object of the invention is to provide a driving apparatus that is easy to provide and economically competitive if compared with the background art.

This aim and these and other objects which will become better apparent hereinafter are achieved by a driving apparatus for the control of electric motors in electrical household appliances or in ventilation apparatuses, comprising:
- a SELV zone, which comprises an analog signal receiving and interpreting unit configured to receive and interpret an analog electrical signal in input;
- an electronic control unit, functionally connected to said analog signal receiving and interpreting unit, configured to adjust, as a function of said analog electrical signal and by means of a three-phase converter to which it is functionally connected, the amplitude and/or frequency values of a three-phase supply current that originates from a mains electrical source which powers at least one electric motor, so as to control said at least one electric motor as a function of said analog signal;
- an auxiliary power supply unit, which is electrically connected to said mains electrical source, which supplies electric power to at least said electronic control unit;
characterized in that said SELV zone is powered by an isolated voltage generated by a transformer unit which comprises a pulse transformer controlled by said electronic control unit by means of a PWM signal transmitted to an electronic switch which is functionally connected to said pulse transformer and to said electronic control unit; and in that
said pulse transformer comprising a primary winding arranged outside the SELV zone and a secondary winding that is comprised in the SELV zone and is galvanically isolated from said primary winding.

This aim and these and other objects are also achieved by a method according to claim 7.

Further characteristics and advantages of the present invention will become better apparent from the description of a preferred but not exclusive embodiment of a driving apparatus for the control and the driving of electric motors, illustrated by way of non-limiting example with the aid of the accompanying drawings, wherein:
Figure 1 is an electric diagram of a driving apparatus according to the background art;
Figure 2 is a simplified electric diagram of a possible embodiment of a driving apparatus according to the invention.

In the accompanying figures, some common graphic symbols are used for electrical diagrams and, unless otherwise indicated, should be interpreted as such.

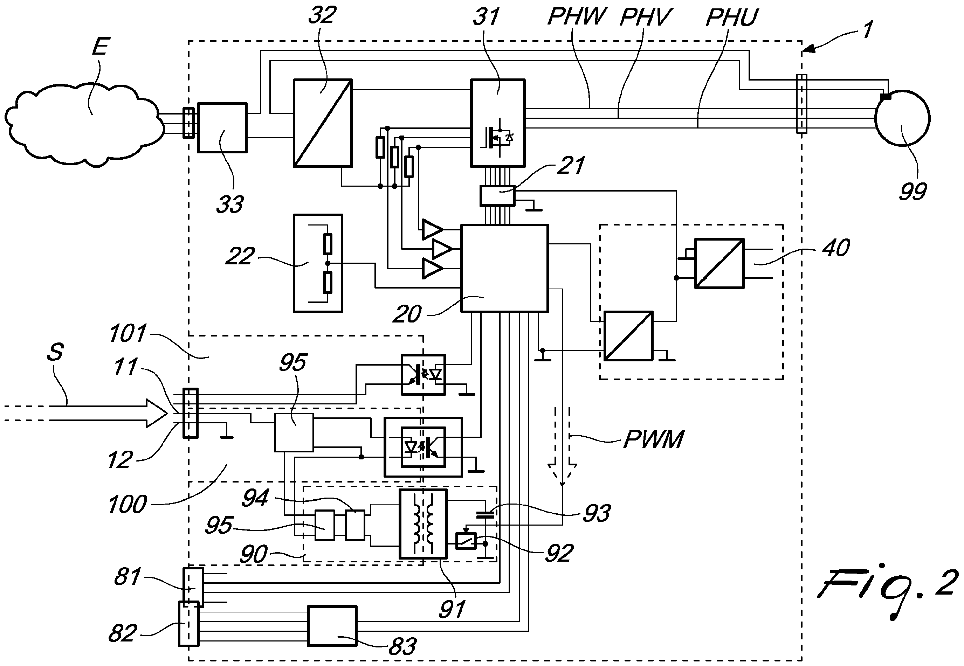

Moreover, it is specified that for the sake of simplicity Figure 2 shows a simplified block diagram in which only the elements useful for understanding the invention are shown and in which some elements, although necessary for the operation of the apparatus (for example the detail of some electronic components or units), are omitted because they are per se known or anyway within the grasp of the person skilled in the art or already described with reference to the background art.

With reference to Figure 2, the driving apparatus for the control of electric motors in electrical household appliances or in ventilation apparatuses, generally designated by the reference numeral 1, preferably comprises an electronic board in which all or part of the elements that will be described hereinafter are integrated. In other words, in the preferred embodiment the driving apparatus 1 is constituted by an electronic board.

In the preferred embodiment, the driving apparatus 1 comprises all the elements present in a driving board of a known type 1A and already described with reference to Figure 1, except for the elements intended to supply power to the "SELV" zone 101 and the SELV zone itself, which comprises different elements.

In particular, the additional winding for the generation of the isolated voltage is not present in the auxiliary power supply unit 40.

For the sake of simplicity, in the non-limiting example shown in Figure 2 each element corresponds, in terms of characteristics and functions, to the respective element that in Figure 1 is designated by the same numeral followed by the letter A, unless otherwise specified (as in the case of the auxiliary power supply unit 40 and of the analog signal receiving and interpreting unit 100).

It should be noted in particular that, according to the invention, the SELV zone 101, which comprises at least one analog signal receiving and interpreting unit 100 configured to receive and interpret an analog electrical signal S in input, is not electrically connected to the auxiliary power supply unit 40. On the contrary, according to the invention, the SELV zone 101 is galvanically isolated with respect to the auxiliary power supply unit 40, as well as with respect to the rest of the apparatus 1 (the rest of the electronic board).

In fact, according to the invention, the SELV zone 101 is not powered by the auxiliary power supply unit 40 but by an isolated voltage generated by a transformer unit 90 that will be described in greater detail hereinafter.

In general, the driving apparatus 1 comprising an analog signal receiving and interpreting unit 100 configured to receive and interpret an analog electrical signal S in input and functionally connected to an electronic control unit 20 (such as for example a microprocessor, a microcontroller or similar device). As already mentioned, the analog signal receiving and interpreting unit 100 is comprised in the SELV zone 101 (English acronym from "safety extra-low voltage") and is powered, like all the elements comprised in this SELV zone 101, by a safety voltage SELV, which is isolated with respect to the rest of the apparatus (the rest of the electronic board) and is generated by the transformer unit 90.

It is useful at this point to clarify that in the present description and in the accompanying claims, the expression "SELV zone 101" is understood to indicate the set of the elements of the apparatus 1 that are powered by an isolated (i.e., safety) voltage SELV, which is galvanically isolated with respect to the rest of the apparatus 1; as is known, the isolated (safety) voltage is a voltage that does not exceed the limit values for extra-low voltage (ELV) and is galvanically isolated with respect to the other electrical elements/systems.

Normally, but not necessarily, the SELV zone 101 corresponds to a portion of the driving apparatus 1 that can be physically limited. Mirror-symmetrically, the rest of the apparatus 1, or "non-SELV zone" or "non-SELV part", is the set of the elements that are outside the SELV zone, are galvanically isolated with respect to it and are powered by a non-isolated voltage (different with respect to the SELV isolated voltage). In the illustrated embodiment, the non-SELV part is the set of the parts of the apparatus 1 that are not electrically isolated from the electrical source E.

The electronic control unit 20, which is in the non-SELV zone, is in turn functionally connected to a three-phase converter 31 (i.e., a three-phase inverter or in any case a DC/AC converter capable of transforming the direct voltage in input into a three-phase system of alternating voltages/currents in output).

Thus, similarly to what occurs in the background art, the electronic control unit 20 is configured to adjust, as a function of the analog electrical signal S and by means of the three-phase converter 31, the amplitude and/or frequency values of a three-phase power supply current, which arrives from a mains electrical source E (such as for example an outlet of a normal home electrical network) and which powers at least one electric motor 99, so as to control the at least one electric motor 99 as a function of said analog signal S.

In the preferred embodiment, the driving apparatus 1 comprises, upstream of the three-phase converter 31, a filter unit 33 (comprising for example an EMI filter which filters the unwanted frequencies) and an AC/DC conversion unit 32.

In practice, the analog signal S is transmitted to the analog signal receiving and interpreting unit 100 by applying to the input poles 11, 12 a voltage as a function of which the rate and torque with which the motor 99 is driven are determined: as a function of this voltage, which is appropriately interpreted, the electronic control unit 20 determines the amplitude and the frequency of the three signals (PHU, PHV and PHW) that supply power to the motor 99.

The electronic control unit 20 and the other elements outside the SELV zone 101 are powered, in a per se known manner, by an auxiliary power supply unit 40 which is electrically connected to the mains electrical source E.

According to the invention, as already mentioned, the SELV zone 101 is powered exclusively by an isolated voltage generated by a transformer unit 90 which comprises a pulse transformer 91 controlled by the electronic control unit 20 by means of a PWM signal (English acronym from "pulse-width modulation"), transmitted to an electronic switch 92 which is functionally connected to the pulse transformer 91 (as well as to the electronic control unit 20).

The pulse transformer 91 is a pulse transformer (or transformer of pulses) of a known type, i.e., one of the devices known in the field also as "pulse transformer" or "gate transformer" or also "gate drive transformer" and usually used to drive semiconductor-based electronic switches such as SCR, TRIAC, MOSFET, etcetera, and more generally a device capable of transferring the power of a square wave or of a pulse train from a primary winding to a secondary winding isolated galvanically from the primary winding.

In greater detail, the pulse transformer 91 comprises a primary winding arranged outside the SELV zone 10 and a secondary winding that is comprised in the SELV zone 101 and is galvanically isolated from the primary winding.

Advantageously, the pulse transformer 91 is powered by a low-voltage power supply comprised in the apparatus 1, outside the SELV zone 101. This low-voltage power supply (for example 15V) is electrically connected to the primary winding of the pulse transformer 91. Conveniently, this low-voltage power supply is filtered, for example by means of a capacitor 93.

In practice, the electronic switch 92 (controlled by the electronic control unit 20 by means of the PWM signal), which is preferably a highfrequency switch, modulates the voltage that arrives from the low-voltage power supply by generating a pulse train which, when applied to the primary winding, generates in output from the secondary winding the isolated voltage that powers the SELV zone 101.

Preferably, the transformer unit 90 comprises a capacitor 93 electrically connected to the primary winding of the pulse transformer 90, as shown in Figure 2, so as to filter the low-voltage power supply that is connected to the primary winding.

In the preferred embodiment, the transformer unit 90 comprises also a rectifier 94 and an optional voltage regulator 95 which is electrically connected to the secondary winding of the pulse transformer 91, so as to rectify and stabilize the voltage in output (i.e., the generated voltage) from it.

It is important to note that the transformer unit is in practice composed of two parts which are galvanically mutually isolated: a first part, which comprises the primary winding of the pulse transformer 91, the switch 92 and the capacitor 93, is comprised in the non-SELV zone, while the second part, which comprises the secondary winding of the pulse transformer 91, the rectifier 94 and the optional voltage regulator, is comprised in the SELV zone 101.

Advantageously, the electronic control unit 20 can be configured to interrupt the activation of the electronic switch 92 (i.e., to interrupt the sending of the PWM signal) during the stand-by step of the driving apparatus 1, thus interrupting the operation of the pulse transformer 91, so as to reduce the power absorbed by the apparatus 1 in this step and thus reduce consumption.

In other words, the apparatus 1 can be configured at least in:
- an active configuration, in which the electronic control unit 20 sends the PWM signal to the electronic switch 92 so as to activate the pulse transformer 91 (i.e., the transfer of power to the SELV zone 101);
- a standby configuration, in which the electronic control unit 20 interrupts the sending of the PWM signal toward said electronic switch 92 so as to interrupt the activation of the pulse transformer 91 and thus the power transfer to the SELV zone 101.

The analog signal receiving and interpreting unit 100 can be any signal receiving and interpreting unit of a known type and preferably but not necessarily comprises a microprocessor 95 or another electronic device capable of reading the value of the analog signal present across the input poles 11, 12 (typically the voltage applied thereto) and convert it into a signal adapted to be transmitted to the non-SELV part of the apparatus, particularly to the electronic control unit 20.

In the preferred embodiment, in which the analog signal receiving and interpreting unit comprises a microprocessor 95 or the like, supplying power to the analog signal receiving and interpreting unit 100 is therefore equivalent to supplying power to at least the microprocessor 95 or the like: it should be noted that in the illustrated example the rectifier 94 and the optional voltage regulator is directly connected to the microprocessor 95 in order to supply power to it.

Conveniently, in order to ensure the galvanic isolation of the SELV zone 101, the analog signal receiving and interpreting unit 100 is functionally connected to the electronic control unit 20 (or in any case to the non-SELV zone of the apparatus 1) by means of one or more galvanic isolators (preferably, but not necessarily, optoisolators) so as to be electrically isolated with respect to the electronic control unit 20 and more generally with respect to the non-SELV zone of the apparatus 1.

Optionally, the driving apparatus 1 also comprises additional interface elements such as inputs/outputs 81, 82 in order to connect buttons 83 and a unit 22 for measuring the rectified DC voltage in output from the AC/DC conversion unit 32, which is connected to the electronic control unit 20, and a driver 21 for managing the conversion performed by the three-phase converter 31.

The operation of the driving apparatus 1 for the control of electric motors in electrical household appliances or in ventilation apparatuses is clear and evident from what has been described.

The method for supplying power to a SELV zone 101 in the driving apparatus 1, which is also the subject matter of the present invention, is also clear and evident and in short comprises the following operations:
- drawing a low voltage that is present in the device 1 outside the SELV zone 101 (in the non-SELV zone);
- supplying with said low voltage a primary winding of a pulse transformer 91 so as to generate in output from a secondary winding of said pulse transformer 91 an isolated voltage with which to power the SELV zone (101); said secondary winding is comprised in the SELV zone 101 and is galvanically isolated from the primary winding.

In the preferred embodiment, the method entails that the pulse transformer 91 is controlled by an electronic control unit 20 by means of a PWM signal transmitted to an electronic switch 92 which is functionally connected to the pulse transformer 91 and to said electronic control unit 20. Preferably, the electronic control unit 20 is the same one that controls the electric motor 99 as a function of the analog signal S and manages the entire apparatus 1.

Optionally, in a standby step of the apparatus 1, the electronic control unit 20 interrupts the activation of the pulse transformer 91 so as to reduce the power absorbed by the apparatus 1 during this step.

In a driving apparatus 1 according to the invention it is thus possible to eliminate the isolated secondary winding that in the background art is used to generate the voltage that supplies power to the SELV zone or even eliminate the entire transformer (normally present in the background art in the auxiliary power supply unit 40A), thus eliminating the means by which the noise propagates.

The absence of the secondary winding, moreover, allows to have a much simpler transformer, of reduced size and thus less expensive; in some embodiments the transformer can be completely eliminated.

It should be noted in particular that in the apparatus 1 according to the invention, the means by which, in the background art, the noise generated by the non-SELV part propagates on the analog input, particularly to the analog signal receiving and interpreting unit 100A, and from there (particularly by means of the negative pole 12A) to the outside of the driving apparatus by means of the connections connected to the poles 11A, 12A, is in fact interrupted.

By virtue of this characteristic of the invention, there is therefore a further saving connected to the lack of need to add internal and external components aimed at filtering the noise originating from the driving apparatus, said noise being drastically reduced.

In practice it has been found that the driving apparatus for the control and driving of electric motors in electrical household appliances or in apparatuses for ventilation and the method for supplying power to the SELV zone of said apparatus, according to the present invention, achieve the intended aim and objects since they allow to reduce the noise and thus the conducted and radiated emissions in output from the driving apparatus.

Another advantage of the driving apparatus and of the method, according to the invention, resides in that the power absorbed is reduced, since it is possible to interrupt, or at least reduce, power absorption in the stand-by step.

Another advantage of the driving apparatus and of the method, according to the invention, resides in that the simplicity and compactness of the systems in which they are implemented are improved.

A further advantage of the driving apparatus, according to the invention, resides in that it is more compact and simple than the background art.

Another advantage of the driving apparatus, according to the invention, resides in that it is easy to provide and economically competitive if compared with the background art.

The driving apparatus for the control and driving of electric motors in electrical household appliances or in apparatuses for ventilation and the method for supplying power to the SELV zone of said apparatus thus conceived are susceptible of numerous modifications and variations, all of which are within the scope of the accompanying claims.

All the details may furthermore be replaced with other technically equivalent elements.

The disclosures in Italian Patent Application No. 102019000006882 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A driving apparatus (1) for the control of electric motors in electrical household appliances or in ventilation apparatuses, comprising:
- a SELV zone (101) which comprises an analog signal receiving and interpreting unit (100) configured to receive and interpret an analog electrical signal (S) in input;
- an electronic control unit (20), functionally connected to said analog signal receiving and interpreting unit (100), configured to adjust, as a function of said analog electrical signal (S) and by means of a three-phase converter (31) to which it is functionally connected, the amplitude and/or frequency values of a three-phase supply current that originates from a mains electrical source (E) with which at least one electric motor (99) is powered, so as to control said at least one electric motor (99) as a function of said analog signal (S);
- an auxiliary power supply unit (40), which is electrically connected to said mains electrical source (E), which supplies electric power to at least said electronic control unit (20);
**characterized in that** said SELV zone (101) is powered by an isolated voltage generated by a transformer unit (90) which comprises a pulse transformer (91) controlled by said electronic control unit (20) by means of a PWM signal transmitted to an electronic switch (92) which is functionally connected to said pulse transformer (91) and to said electronic control unit (20); and **in that**
said pulse transformer (91) comprises a primary winding arranged outside the SELV zone (101) and a secondary winding that is comprised in the SELV zone (101) and is galvanically isolated from said primary winding.

2. The driving apparatus (1) according to claim 1, **characterized in that** said pulse transformer (91) is powered by a low-voltage power supply that is comprised in the apparatus (1) outside the SELV zone (101) and is electrically connected to the primary winding of the pulse transformer (91).

3. The driving apparatus (1) according to claim 2, **characterized in that** said transformer unit (90) comprises a capacitor (93) which is electrically connected to said primary winding of the pulse transformer (91) so as to filter said low-voltage power supply.

4. The driving apparatus (1) according to one or more of the preceding claims, **characterized in that** said transformer unit (90) comprises a rectifier (94) and an optional voltage regulator which are electrically connected to the secondary winding of the pulse transformer (91) so as to rectify and stabilize the voltage in output from it.

5. The driving apparatus (1) according to one or more of the preceding claims, **characterized in that** said analog signal receiving and interpreting unit (100) is functionally connected to said electronic control unit (20) by means of one or more galvanic isolators, so as to be electrically isolated with respect to said electronic control unit (20).

6. The driving apparatus (1) according to one or more of the preceding claims, **characterized in that** it can be configured at least in:
an active configuration, in which said electronic control unit (20) sends said PWM signal to said electronic switch (92) so as to activate said pulse transformer (91); and in
a standby configuration, in which said electronic control unit (20) interrupts the sending of said PWM signal toward said electronic switch (92) so as to interrupt the activation of said pulse transformer (91).

7. A method for supplying power to a SELV zone (101) in a driving apparatus (1) for the control of electric motors in electric household appliances or in ventilation apparatuses, said SELV zone (101) comprising an analog signal receiving and interpreting unit (100) configured to receive and interpret an analog electrical signal (S) in input,
**characterized in that** it comprises the steps of:
- drawing a low voltage that is present in the device (1) outside of said SELV zone (101);
- supplying with said low voltage a primary winding of a pulse transformer (91) so as to generate in output from a secondary winding of said pulse transformer (91) an isolated voltage to power said SELV zone (101); said secondary winding being comprised in said SELV zone (101) and galvanically isolated from said primary winding.

8. The method according to claim 7, **characterized in that** said pulse transformer (91) is controlled by an electronic control unit (20) by means of a PWM signal transmitted to an electronic switch (92) which is functionally connected to said pulse transformer (91) and to said electronic control unit (20).

9. The method according to claim 8, **characterized in that** in a standby step of the apparatus (1) said electronic control unit (20) interrupts the activation of said pulse transformer (91) so as to reduce the power absorbed by the apparatus (1).

10. The method according to one or more of claims 7 to 9, **characterized in that** said low voltage is filtered by means of a capacitor (93).
